# EUROPEAN PATENT SPECIFICATION

(11) **EP 1 858 724 B1**
(45) Date of publication and mention of the grant of the patent: **03.02.2010**
(21) Application number: 06709933.3
(22) Date of filing: 28.02.2006
(51) Int. Cl.: B60K 15/04

(54) **MAGNETIC HOLDING DEVICE FOR TANK CLOSURE CAPS**
MAGNETISCHE HALTEVORRICHTUNG FÜR TANKVERSCHLUSSKAPPEN
DISPOSITIF DE SUPPORT MAGNETIQUE POUR COUVERCLES DE FERMETURE DE RESERVOIR

(30) Priority: 28.02.2005 GB 0503984; 22.07.2005 GB 0515084
(43) Date of publication of application: 28.11.2007
(73) Proprietor: Miceli, Antonio, Hitchin Hertfordshire SG4 0DB (GB)
(72) Inventor: Miceli, Antonio, Hitchin Hertfordshire SG4 0DB (GB)
(74) Representative: Burrows, Anthony Gregory
(86) International application number: PCT/GB2006/000709
(87) International publication number: WO 2006/090187

(56) References cited:
- DE-A1- 4 038 377
- DE-A1- 4 401 088
- GB-A- 927 229
- US-A- 2 800 931
- US-A- 2 982 318
- US-A- 3 113 599
- US-A- 4 957 266

## Description

This invention relates to caps for containers for holding a flowable material and, in particular, to such caps which include magnetic material.

In relation to motor vehicles, when fuel is needed and a person puts fuel into their vehicle at a fuel station, it is very frustrating if the wrong kind of fuel is put into the vehicle and it is very expensive to correct the error. This problem is commonly known as mis-fuelling and, in the United Kingdom alone, around 120,000 vehicles per year are stranded after putting in the wrong fuel in the vehicle's fuel tank and have to pay up to £3,000 to get their vehicles back on the road, especially if the vehicle has been driven after the mistake of mis-fuelling.

Company car drivers are known to be among the main culprits of mis-fuelling, especially those who use pool or hire vehicles on a regular basis. In addition, the most common cause of mis-fuelling is putting petrol into a vehicle that runs on diesel and the most regular occurrences occur when people who are driving for business purposes regularly are unfamiliar with vehicles such as hire cars. Petrol being put into diesel vehicles is likely to be the most common form of mis-fuelling since the narrower nozzles of petrol pumps fits into the wider diesel aperture on a vehicle, and since the popularity of modern diesel vehicles has increased in recent years, this problem of mis-fuelling occurs more frequently.

Furthermore, it is not just fuel that is wasted in correcting a mis-fuelling. The cost of repairing a mis-fuelled vehicle, as already mentioned, can be thousands of pounds sterling and just two drivers mis-fuelling in a year could dent a fleet budget by more than £10,000 in the worst case scenario. If the vehicle is not started after the mis-fuelling mistake, the repair simply needs the fuel to be drained and the fuel system flushed and is not as costly to repair compared to if the driver starts the engine, such that the repair is likely to include the replacement of such things as injection components, fuel and filters.

Mis-fuelling can also render the vehicle warranty invalid, which is clearly of great inconvenience to the vehicle user.

Devices to prevent mis-fuelling already exist. One such device includes a component which attaches to the inside of a vehicle fuel flap and, when the fuel flap is opened, the device emits an audible warning message to remind a driver that the vehicles runs on diesel fuel.

US 2 982 318 discloses an apparatus for filling a fuel container according to the preamble of apparatus claim 1 and method claim 9.

The above problems are solved by the special features of claim 1 and/or 9.

According to one aspect of the present invention, there is provided apparatus for filling a container for flowable material with a correct flowable material comprising a cap for said container for flowable material, a first magnet of said cap, and a second or third magnet at a surface for co-operation or repulsion with said first magnet, the co-operation giving an indication as to whether the flowable material for said container has been correctly selected.

According to a second aspect of the present invention, there is provided a method for filling a container for flowable material with a correct flowable material comprising bringing a cap for said container for flowable material to a dispensing unit for said material, and thereby causing co-operation or repulsion between a first magnet of said cap and a second or third magnet at a surface, said co-operation indicating that the flowable material for said container has been correctly selected.

Advantageously, the surface is one on a dispensing unit for the flowable material, and the co-operation between the first and second magnets indicate that a flowable material to be put into the container has been correctly selected.

Preferably, the cap is a fuel cap of a motor vehicle and the container for flowable material is a fuel tank of the vehicle which requires, for instance, either petrol or diesel fuel. In addition, the dispensing unit is preferably a fuel pump comprising nozzles for both petrol and diesel fuel, and attraction between the first magnet of the fuel cap when placed in the region of the second magnet of the dispensing unit informs the person putting fuel into the vehicle that the correct fuel is being used. Conversely, if there is repelling between the first and second magnets, then the person entering fuel into the vehicle is informed before fuel is entered into the vehicle that the nozzle associated with the second magnet will dispense fuel which is incorrect for that particular vehicle.

The first, second and third magnets may be of any suitable type, and in particular consideration of the second and third magnet, it could be, for example a permanent magnet, an electromagnet or a solenoid coil.

In order that the invention may be clearly and completely disclosed, reference will now be made, by way of example only, to the accompanying drawings, in which:-
Figure 1 shows a side view of a fuel filling nozzle of a fuel pump and a fuel cap of a vehicle according to a first version of a fuel filling system, and
Figure 2 shows a front elevation of a fuel pump according to a second version of the fuel filling system.

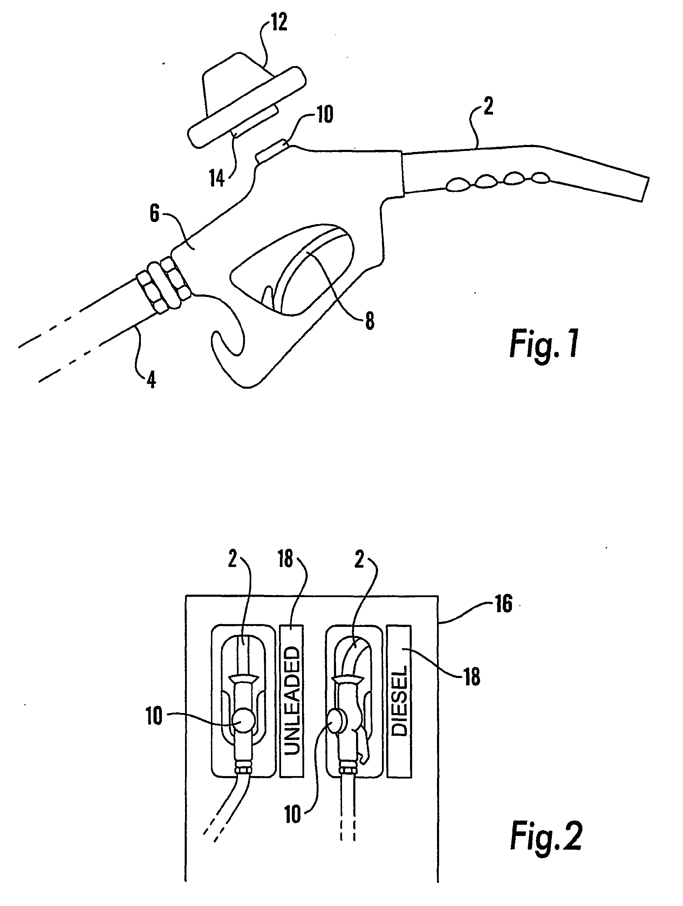

Referring to Figure 1, a first version of a fuel filling system comprises a filling nozzle 2 attached to a fuel pump by a hose 4 and includes the standard features of conventional nozzles such as a handle 6, a trigger 8 and a disc 10 which, conventionally, includes some kind of graphical information. A fuel cap 12 of a motor vehicle, on its outer surface, includes a first magnet 14. In addition to the disc 10 of the filling nozzle 2 containing graphical information, it also includes a second magnet.

If the fuel cap 12 is from a car which runs on unleaded petrol, the magnet 14 is of a particular magnetic field which is attractive to the magnet at the disc 10 of a filling nozzle 2 if that particular nozzle is for filling the vehicle with unleaded fuel. Therefore, if the person filling the vehicle with fuel is using the correct nozzle for unleaded petrol, and he brings together the magnets 14 and 10, then the fuel cap 12 will magnetically attract and thereby stick to the disc 10. On a corresponding filling nozzle for diesel fuel the disc 10 shall comprise a magnet which would cause a fuel cap 12 from an unleaded vehicle to be repelled away from the handle 6 of a nozzle 2 for dispensing diesel fuel. Since the fuel cap 12 of an unleaded petrol car will therefore not stick to the handle 6 of a diesel filling nozzle 2, this immediately informs the person putting fuel into the vehicle that he is about to use the wrong fuel. Similarly, when the fuel cap 12 for a diesel vehicle is placed on the disc 10 of a diesel filling nozzle 2, there will be attraction of the magnets such that the fuel cap sticks to the handle 6, and, if the diesel fuel cap 12 is brought against the disc 10 of a filling nozzle 2 for dispensing unleaded petrol, there will be repelling of the magnets to prevent mis-fuelling.

The magnets may be bar magnets incorporated in the cap 12 and the disc 10 having opposite north-seeking and south-seeking poles, such that in the fuel cap 12 for an unleaded petrol vehicle it could have its south-seeking pole at the external surface of the cap, such that the disc 10 of an unleaded filling nozzle 2 would have a corresponding magnet with a north-seeking pole facing outwardly. Therefore, when a fuel cap 12 of an unleaded petrol vehicle is placed onto the disc 10 of the unleaded filler nozzle 2, the magnets will attract each other and the fuel cap 12 will stick to the filler nozzle 2. On the other hand, a fuel cap 12 for a diesel vehicle would have a similar magnet, but with the north-seeking pole facing outwardly and the filler nozzle for diesel fuel would have a corresponding magnet with its south-seeking pole extending outwardly, such that when the diesel fuel cap 12 is placed against the disc 10 of the diesel filler nozzle, the magnets will attract each other. If, however, a fuel cap 12 for a diesel vehicle is placed against the disc 10 of a filler nozzle 2 for dispensing unleaded petrol, the poles of the magnets facing each other are the same and, thus, will repel each other. As a result, the fuel cap 12 will not stick to the disc 10 which informs the user that they are about to use the wrong fuel.

The magnets may also be in the form of thin pieces of permanent magnets. In this way, the magnets 14 on the fuel cap 12 may be incorporated into the fuel cap 12 itself, as described above or be adhesive such that the magnet of the cap 12 could be supplied separately from the fuel cap 12 itself and simply stuck using an adhesive onto the external surface of the fuel cap 12 by the user of the vehicle. The disc 10 of the filler nozzle 2 could also similarly comprise a thin-form magnet.

Instead of the disc 10 of the filler nozzle 2 comprising a magnet, which disc 10 does not have a large surface area, a magnet in the form of a thin rectangular strip can be provided at the fuel pump as shown in Figure 2. A fuel pump 16 has two filler nozzles 2, one for unleaded petrol and one for diesel fuel, both shown in the non-use position hooked onto the pump 16. As a person re-fuelling a vehicle looks at the pump 16, to the right-hand side of the nozzles 2 a rectangular magnet strip 18 is provided suitably attached to the external surface of the pump 16. These magnet strips 18 have a larger surface area than the discs 10 of the nozzles 2 and have magnetic fields arranged to work in the same way as already described to prevent mis-fuelling incidents. An advantage of the magnet strips 18 is that, not only can they indicate which type of fuel is available from the nozzle 2 located immediately adjacent to it, but also can display other graphical information, such as advertising.

This fuel filling system also has the advantage that the fuel cap 12 is magnetically connected to either the filler nozzle 2 or the dispensing pump unit 16 so that the fuel cap 12 can be kept in place rather than rolling about on a surface where it is placed. In the situation where a fuelling station does not have the present fuel filling system, and, if the vehicle fuel cap cover does not have its own fuel cap locator, a further appropriate magnet can be attached to the inside surface of the fuel cap cover and then the fuel cap 12 incorporating the magnet 14 can be attached to the cover where the further magnet is located. The further magnet is also, advantageously, a thin magnet so as not to occupy a large volume of space.

Furthermore, in different countries around the World, different colours are used to represent different fuel types and, of course, different words are used for the different fuel types according to the local language. The present fuel filling system would solve any problems caused by representative colour and/or language confusion at a filling station.

## Claims

1. Apparatus for filling a fuel container with a correct fuel, comprising a cap for said fuel container, a first magnet of said cap, fuel dispensing means including a second magnet at a surface and presenting outwardly one polarity for co-operation with said first magnet, **characterised by** a third magnet presenting outwardly the opposite polarity for co-operation with said first magnet, whereby the respective co-operations of the second and third magnets with the first magnet indicate to a user as to whether the fuel for said fuel container has been correctly selected.

2. Apparatus according to claim 1, where said cap is a fuel cap of a motor vehicle.

3. Apparatus according to claim 2, wherein said first magnet is detachably connected to said fuel cap.

4. Apparatus according to claim 2 or 3, wherein said container is a fuel tank of said motor vehicle and said dispensing means is a fuel pump.

5. Apparatus according to any preceding claim, wherein said second and third magnets are located at portions of handles of respective nozzles of said dispensing means.

6. Apparatus according to any preceding claim, wherein said first, second and third magnets are of a thin form.

7. Apparatus according to any preceding claim, wherein said second and third magnets are each in the form of a thin rectangular strip.

8. Apparatus according to claim 7, wherein the rectangular strip is an advertising platform.

9. A method of filling a fuel container with a correct fuel, comprising the step of bringing a cap for said fuel container to a dispensing unit for said fuel, and thereby causing co-operation between a first magnet of said cap and a second magnet at a surface, **characterised by** said co-operation constituting repulsion and indicating that the fuel for said container has been incorrectly selected, and, by subsequently causing co-operation constituting attraction between said first magnet and a third magnet, indicating that a correct, second fuel for said container has been selected.

## Patentansprüche

1. Vorrichtung zum Befüllen eines Kraftstoffbehälters mit dem richtigen Kraftstoff, mit einer Kappe für den Kraftstoffbehälter, einem an der Kappe vorgesehenen ersten Magneten, einer Kraftstoffausgabeeinrichtung mit einem an einer Fläche vorgesehenen zweiten Magneten, der eine zum Zusammenwirken mit dem ersten Magneten geeignete und nach außen weisende Polarität aufweist, **gekennzeichnet durch** einen dritten Magneten, dessen dem Zusammenwirken mit dem ersten Magneten entgegengesetzte Polarität nach außen gewandt ist, wobei das jeweilige Zusammenwirken des zweiten und des dritten Magneten mit dem ersten Magneten einem Benutzer angibt, ob der Kraftstoff für den Kraftstoffbehälter korrekt gewählt wurde.

2. Vorrichtung nach Anspruch 1, bei welcher die Kappe der Tankdeckel eines Kraftfahrzeugs ist.

3. Vorrichtung nach Anspruch 2, bei welcher der erste Magnet lösbar mit dem Tankdeckel verbunden ist.

4. Vorrichtung nach Anspruch 2 oder 3, bei welcher der Behälter ein Kraftstofftank des Kraftfahrzeugs und die Ausgabeeinrichtung eine Zapfsäule ist.

5. Vorrichtung nach einem der vorhergehenden Ansprüche, bei welcher der zweite und der dritte Magnet an Bereichen von Griffen jeweiliger Zapfdüsen der Ausgabeeinrichtung angeordnet sind.

6. Vorrichtung nach einem der vorhergehenden Ansprüche, bei welcher der erste, der zweite und der dritte Magnet dünn ausgebildet sind.

7. Vorrichtung nach einem der vorhergehenden Ansprüche, bei welcher der zweite und der dritte Magnet jeweils in Form eines dünnen rechteckigen Streifens vorliegen.

8. Vorrichtung nach Anspruch 7, bei welcher der rechteckige Streifen eine Werbefläche ist.

9. Verfahren zum Befüllen eines Kraftstoffbehälters mit dem richtigen Kraftstoff, mit dem Schritt des Verbringens einer Kappe des Kraftstoffbehälters zu einer Ausgabeeinrichtung für den Kraftstoff, und des Bewirkens des Zusammenwirkens zwischen einem ersten Magneten der Kappe und einem zweiten Magneten an einer Fläche, **dadurch gekennzeichnet, dass** das Zusammenwirken ein Abstoßen ist und dem Benutzer angibt, dass der Kraftstoff für den Behälter falsch gewählt wurde, und dass anschließend ein Zusammenwirken in Form von Anziehung zwischen dem ersten Magneten und einem dritten Magneten bewirkt wird, wodurch angegeben wird, dass ein richtiger, zweiter Kraftstoff für den Behälter gewählt wurde.

## Revendications

1. Appareil permettant de remplir un réservoir de carburant avec le carburant approprié, comprenant un bouchon pour ledit réservoir de carburant, un premier aimant dudit bouchon, des moyens de distribution de carburant y compris un second aimant placé sur une surface et présentant vers l'extérieur une polarité permettant une coopération avec ledit premier aimant, **caractérisé par** un troisième aimant présentant vers l'extérieur une polarité opposée pour coopérer avec ledit premier aimant, par lequel les coopérations respectives du second et du troisième aimants avec le premier aimant indiquent à un utilisateur si le carburant destiné audit réservoir de carburant a été correctement sélectionné.

2. Appareil selon la revendication 1, dans lequel le bouchon est un bouchon de carburant d'un véhicule à moteur.

3. Appareil selon la revendication 2 dans lequel ledit premier aimant est connecté de façon amovible audit bouchon de carburant.

4. Appareil selon les revendications 2 ou 3, dans lequel ledit réservoir est un réservoir de carburant dudit véhicule à moteur et lesdits moyens de distribution sont une pompe à carburant.

5. Appareil selon l'une quelconque des revendications précédentes, dans lequel ies second et troisième aimants sont situés sur des parties des poignées respectives des Pistolets des moyens de distribution.

6. Appareil selon une quelconque des revendications précédentes, dans lequel lesdits premier, second et troisième aimants sont de forme mince.

7. Appareil selon l'une quelconque des revendications précédentes, dans lequel lesdits second et troisième aimants ont chacun la forme d'une mince bande rectangulaire.

8. Appareil selon la revendication 7, dans lequel la bande rectangulaire est un support publicitaire.

9. Une méthode de remplissage d'un réservoir de carburant avec le carburant approprié, comprenant une étape consistant à approcher le bouchon dudit réservoir de carburant vers l'unité de distribution dudit carburant, et entraînant ainsi une coopération entre un premier aimant dudit bouchon et un second aimant se trouvant sur une surface, **caractérisé en ce que** ladite coopération constitue une répulsion et indique que le carburant destiné au dit réservoir a été incorrectement sélectionné et, donc une coopération sous forme d'attraction entre ledit premier aimant et un troisième aimant, indiquant qu'un deuxième carburant approprié a été sélectionné pour ledit réservoir.
